# FASCICULE DE BREVET EUROPEEN

(11) **EP 2 219 945 B1**
(45) Date de publication et mention de la délivrance du brevet: **20.03.2013**
(21) Numéro de dépôt: 08872447.1
(22) Date de dépôt: 05.12.2008
(51) Int. Cl.: B64D 11/06, B60N 2/01

(54) **AMÉNAGEMENT OPTIMISÉ D'UNE CABINE D'AÉRONEF**
OPTIMIERTES FLUGZEUGKABINENLAYOUT
OPTIMISED AIRCRAFT CABIN LAYOUT

(30) Priorité: 06.12.2007 FR 0708523; 18.01.2008 FR 0800263
(43) Date de publication de la demande: 25.08.2010
(73) Titulaire: Airbus, 31700 Blagnac (FR)
(72) Inventeur: SAINT-JALMES, Bruno, F- 31400 Toulouse (FR); ZANEBONI, Jason, F-31700 Blagnac (FR); RUMEAU, Bernard, F-31700 Cornebarrieu (FR)
(74) Mandataire: Santarelli
(86) Numéro de dépôt international: PCT/FR2008/001697
(87) Numéro de publication internationale: WO 2009/101294

(56) Documents cités:
- EP-A- 0 126 056
- WO-A-03/053735
- WO-A-2005/014395
- GB-A- 733 081
- GB-A- 2 438 162
- JP-A- 2005 219 636
- US-A- 2 046 859
- US-A- 2 947 349
- US-A1- 2004 035 980
- US-A1- 2004 046 430

## Description

La présente invention concerne un aménagement optimisé d'une cabine pour un véhicule de transport de passagers.

La présente invention concerne plus particulièrement mais non exclusivement les aéronefs destinés au transport commercial de passagers. Dans un tel aéronef, un souci constant de l'homme du métier est de permettre à un nombre de voyageurs aussi grand que possible de voyager dans les meilleures conditions de confort possible. L'aménagement d'une cabine d'aéronef est toujours un compromis entre l'espace réservé à chaque passager et le nombre de passagers pouvant être accueillis (voir le document JP 2005 219 636).

Dans les aéronefs destinés à réaliser des vols long-courriers, les passagers sont souvent amenés à voyager de nuit et les compagnies souhaitent alors proposer à leurs passagers des places couchées. Il n'est généralement pas possible à tous les passagers voyageant assis de bénéficier d'une couchette pour dormir.

Plusieurs solutions ont déjà été proposées pour aménager l'intérieur d'une cabine d'aéronef. Ainsi, dans le document FR-2 843 730 propose un aménagement de modules dans lesquels un passager peut à chaque fois voyager assis mais aussi en position couchée. La configuration proposée dans ce document permet à chaque passager de quitter son module sans avoir à déranger son (ou ses) voisin(s).

Le document FR-2 866 840 propose quant à lui un aménagement de cabine dans lequel tous les passagers voyagent dans le sens de la marche et peuvent également voyager en position couchée.

Le document FR-2 873 349 propose une solution alternative dans l'aménagement d'une cabine d'aéronef. En effet, la cabine d'aéronef divulguée par ce document présente sur un premier niveau des places assises destinées à accueillir des passagers et dans la partie supérieure de la cabine, des couchettes sont aménagées pour certains des passagers voyageant ainsi au niveau inférieur. Alors que dans les deux premiers documents évoqués précédemment un passager reste sur le même siège lorsqu'il passe de la position assise à la position couchée, dans ce troisième document, une zone de la cabine est réservée aux passagers lorsqu'ils voyagent en position assise et certains de ces passagers se déplacent vers les couchettes pour aller dormir en position allongée.

Dans les aménagements de cabine connus de l'art antérieur, non seulement dans les trois aménagements évoqués plus haut mais aussi dans la plupart des aménagements connus, l'agencement intérieur de la cabine est difficilement modulable. Il est connu par exemple de moduler des banquettes pour qu'elles puissent accueillir soit trois passagers de classe économique, soit deux passagers en classe affaire. Toutefois, lorsqu'une cabine, ou une partie de cabine, est destinée à recevoir des passagers en position couchée, elle reçoit le même nombre de passagers en position assise. L'idée originale à la base de la présente invention est notamment de faire voyager dans une cabine d'aéronef un grand nombre de passagers pour des vols court ou moyen-courriers et de pouvoir facilement changer la configuration de la cabine lorsque l'aéronef est utilisé sur des vols long-courriers où l'on souhaite offrir aux passagers la possibilité de dormir en position allongée.

La présente invention a alors pour but de fournir un aménagement de cabine d'aéronef pour lequel sont à la fois optimisés le nombre de passagers pouvant voyager en position assise et le nombre de passagers pouvant voyager en position allongée.

La présente invention a donc pour but de fournir un meilleur confort aux passagers puisqu'elle doit permettre à un grand nombre d'entre eux de pouvoir dormir en position allongée. Avantageusement, en position assise, les passagers auront également plus de confort avec une largeur de siège accrue par rapport à l'état de la technique. Avantageusement, l'espace entre deux sièges situés l'un derrière l'autre sera éventuellement accru. Dans un aménagement selon l'invention, il conviendra également de limiter le nombre de sièges où les passagers doivent s'excuser auprès de leurs voisins lorsqu'ils souhaitent quitter leur place.

Un autre but de l'invention est de permettre de limiter les temps d'embarquement et de débarquement des passagers.

À cet effet, la présente invention propose une cabine dans un véhicule de transport de passagers selon la revendication 1.

Selon la présente invention, au moins une rangée d'au moins deux sièges est disposée de manière à être inclinée par rapport à un couloir longitudinal, et les sièges de ladite rangée sont disposés côte à côte et orientés perpendiculairement à ladite rangée et vers le couloir permettant l'accès à ladite rangée.

Par rapport à une configuration classique où les sièges sont disposés en rangées transversales par rapport à un couloir longitudinal (ou plusieurs couloirs), on propose ici d'incliner les rangées de sièges par rapport à leur position transversale. L'angle d'inclinaison est adapté à la largeur de la cabine du véhicule.

Dans une cabine selon la présente invention, le confort des passagers est accru car ceux-ci bénéficient de plus d'espace au niveau des coudes ainsi qu'au niveau des jambes. L'inclinaison donnée à la rangée est de préférence telle que non seulement un passager se trouvant au bord du couloir d'accès à la rangée et vers lequel il est orienté, mais également son voisin immédiat, peuvent quitter leur place sans avoir à déranger leurs voisins et devoir s'excuser auprès d'eux. L'angle d'inclinaison est un paramètre variable en fonction notamment de la largeur de la cabine -ou bien le diamètre du fuselage de l'aéronef- et du pas entre deux rangées successives.

Dans une forme de réalisation avantageuse d'une cabine selon la présente invention, deux rangées de sièges sont disposées l'une à côté d'une autre en formant un chevron. Il convient ici d'avoir une cabine assez large pour permettre une telle configuration. Cette forme de réalisation est avantageuse en ce qu'un siège peut être aménagé à la pointe du chevron formé par deux rangées de sièges. Un siège supplémentaire peut alors être proposé pour accueillir un passager. Une optimisation de l'espace peut ainsi être réalisé.

Une variante de réalisation pouvant être utilisée pour des cabines de largeur moindre prévoit que deux rangées de sièges sont disposées l'une à côté de l'autre avec toutefois un décalage longitudinal.

Dans une forme de réalisation préférée, chaque rangée de sièges est capable d'accueillir au moins trois passagers en position assise. Cette forme de réalisation présente l'avantage d'avoir des rangées de sièges assez larges pour pouvoir accueillir un passager en position couchée en rajoutant un supplément de couchette en bout de rangée, ce supplément pouvant par exemple être l'espace laissé libre entre une rangée inclinée et une paroi latérale de la cabine.

Pour libérer, au moins un peu, le(s) couloir(s) des jambes des passagers assis côté couloir, il est proposé, en variante de réalisation, que, dans au moins une rangée comportant trois sièges ou plus, le siège en bout de rangée et se trouvant du côté d'un couloir est incliné vers les autres sièges de la rangée. Une telle variante de réalisation pourra être éventuellement adoptée en fonction de la largeur de la cabine et de l'espace dont on souhaite disposer au niveau des couloirs. De cette manière, les passagers assis sur de tels sièges inclinés, lorsqu'ils étendent leurs jambes, empiètent moins sur le couloir. On remarque également que, pour un même nombre de sièges dans chaque rangée et pour une largeur de cabine donnée, cette variante de réalisation permet d'augmenter légèrement la largeur du (des) couloir(s). L'inclinaison du siège se trouvant en bout de rangée est généralement de l'ordre de quelques degrés, de préférence inférieure à 30°. Cette valeur est liée à la largeur de la cabine aménagée.

Pour permettre à une cabine selon l'invention d'accueillir des passagers en position couchée, il est prévu avantageusement qu'au moins une rangée de sièges soit transformable en deux couchettes superposées, chaque siège comportant une assise et un dossier et les dossiers pouvant être pivotés de manière à former une surface plane sensiblement horizontale au-dessus des assises transformées en une couchette. De préférence, des rangées de sièges dans la cabine sont modulables de manière à pouvoir accueillir en position assise soit deux, soit trois passagers. Une telle rangée modulable peut alors être utilisée pour recevoir trois passagers lorsque le véhicule réalise des voyages relativement courts, ainsi que des voyages diurnes. Par contre, lorsqu'il est prévu de proposer aux passagers de se coucher pour dormir, la rangée modulable est configurée pour recevoir deux passagers. Si cette rangée est transformable en couchettes comme mentionné plus haut, les deux passagers occupant cette rangée pourront aussi être accueillis tous les deux en position couchée. Il peut ici aussi être envisagé de prévoir trois couchettes superposées. Dans ce cas, trois passagers assis sur une rangée de sièges pourront également être accueillis couchés dans cette rangée.

Dans une configuration selon la présente invention donnée ici à titre d'exemple, une cabine comporte deux parois latérales et un couloir longitudinal, et des rangées inclinées sont disposées parallèlement les unes aux autres à chaque fois entre une paroi latérale et le couloir longitudinal. Cette configuration est par exemple adaptée à un aéronef de type monocouloir.

Selon un autre exemple de configuration adaptable à un aéronef, une cabine selon l'invention comporte deux parois latérales et deux couloirs longitudinaux, des rangées inclinées sont disposées parallèlement les unes aux autres à chaque fois entre un couloir longitudinal et une paroi latérale, et des rangées inclinées sont disposées parallèlement les unes aux autres à chaque fois entre les deux couloirs longitudinaux.

Un troisième exemple de configuration de cabine prévoit que cette dernière comporte deux parois latérales et deux couloirs longitudinaux, que des rangées inclinées sont disposées parallèlement les unes aux autres à chaque fois entre un couloir longitudinal et une paroi latérale, et que des rangées inclinées sont disposées en chevrons entre les deux couloirs longitudinaux.

Dans ces trois exemples, chaque rangée de sièges est avantageusement transformable en deux couchettes superposées, et l'espace sensiblement triangulaire entre chaque rangée se trouvant le long d'une paroi latérale et la paroi latérale correspondante est utilisé pour former un complément de couchette.

Dans les configurations dans lesquelles deux rangées sont disposées en forme de chevron, un espace de rangement peut être par exemple aménagé à chaque pointe d'un chevron formé par deux rangées de sièges.

Dans une cabine selon la présente invention, tous les sièges sont de préférence orientés dans le même sens, par exemple vers l'avant du véhicule.

La présente invention concerne également un aéronef, caractérisé en ce qu'il comporte une cabine telle que décrite ci-dessus. Toutefois, une cabine selon la présente invention peut trouver sa place dans d'autres véhicules destinés à transporter des passagers pendant plusieurs heures, comme par exemple des cars de tourisme, des trains, ....

Des détails et avantages de la présente invention ressortiront mieux de la description qui suit, faite en référence aux dessins schématiques annexés sur lesquels :
La figure 1 représente une première vue de dessus d'une cabine selon l'invention pour un premier aménagement de celle-ci,
La figure 2 représente en vue de dessus la même cabine que celle de la figure 1 avec un aménagement différent,
La figure 3 montre en vue de dessus la cabine des figures 1 et 2 aménagée pour accueillir les passagers en position couchée,
La figure 4 montre en vue de dessus une variante de réalisation,
La figure 5 illustre deux variantes de réalisation de la présente invention adaptées à un avion monocouloir,
La figure 6 montre une variante de réalisation pour un avion à deux couloirs,
La figure 7 montre une autre variante de réalisation pour un avion à deux couloirs,
La figure 8 est une vue en élévation d'une "rangée" de sièges en position couchette comme représentée sur la figure 3, et
La figure 9 est une vue en perspective montrant quelques sièges de la forme de réalisation des figures 1 à 3.

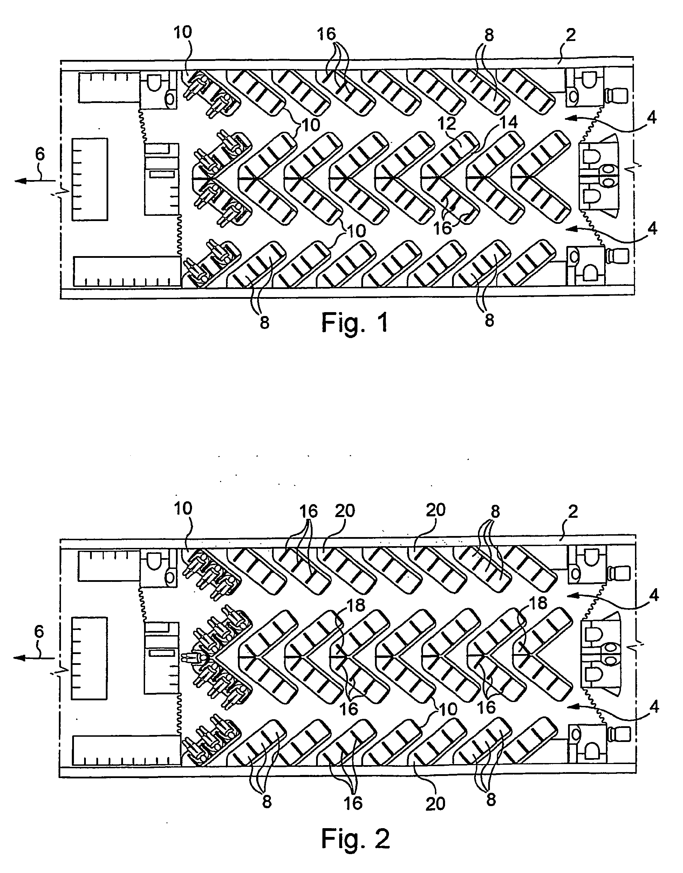

Les figures 1 à 3 présentent en vue de dessus un aménagement de cabine d'aéronef selon l'invention.

La cabine d'aéronef représentée ici comporte, de façon classique, deux parois latérales 2 et deux couloirs longitudinaux 4. On reconnaît également sur ces figures des équipements classiques d'une cabine d'aéronef qui ne seront pas décrits dans le détail ici. Il s'agit de toilettes, de rangements de chariots et autres vestiaires. Une flèche 6 sur les figures indique la direction de vol de l'aéronef.

De manière classique, on trouve des sièges 8 destinés à accueillir des passagers en position assise entre d'une part chaque paroi latérale 2 et un couloir longitudinal 4 et d'autre part entre les deux couloirs longitudinaux 4. Ici, le positionnement des sièges 8 est tout à fait original.

Les sièges sont disposés ici les uns à côté des autres comme dans une configuration classique d'aéronef où les sièges sont organisés en rangées et colonnes. Toutefois, ici les rangées 10 ne sont pas perpendiculaires aux couloirs longitudinaux 4 mais sont inclinées par rapport à ce couloir. Les rangées 10 sont inclinées de telle sorte que d'une part les passagers assis sur les sièges 8 regardent globalement vers l'avant de l'aéronef et d'autre part ces passagers sont orientés vers le couloir longitudinal 4. On remarque que chaque rangée 10 de sièges 8 est desservie par un couloir longitudinal 4. Les sièges 8 d'une rangée 10 sont alors orientés vers le couloir longitudinal 4 desservant ladite rangée 10.

Dans cette configuration, pour les rangées 10 se trouvant le long des parois latérales 2, les sièges 8 les plus proches de la paroi latérale correspondante sont plus en avant que les sièges 8 plus éloignés de la paroi latérale 2 correspondante.

Les sièges 8 sont également disposés de manière originale entre les deux couloirs longitudinaux 4. On retrouve ici des rangées 10 de sièges 8. Ces rangées 10 sont disposées deux à deux en forme de chevron. Sur la figure 1, chaque rangée 10 de sièges 8 est destinée à accueillir deux passagers. Chaque siège 8 comporte une assise 12 et un dossier 14. Des accoudoirs 16 sont également prévus. On remarque sur la figure 1 que les passagers sont installés confortablement et bénéficient d'une grande largeur de siège.

La figure 2 représente la même cabine d'aéronef que celle de la figure 1. Toutefois ici, les accoudoirs 16 représentés sur cette figure sont positionnés un peu différemment par rapport à la figure 1 et chaque rangée 10 de sièges 8 peut ainsi accueillir trois passagers. Les accoudoirs 16 peuvent être des accoudoirs mobiles pouvant se translater transversalement par rapport aux sièges 8. Toutefois, dans une forme de réalisation préférée, il est prévu d'avoir deux jeux d'accoudoirs par rangée 10 de sièges 8 : un premier jeu d'accoudoirs 16 pour configurer la rangée 10 de manière à accueillir deux passagers et un second jeu d'accoudoirs 16 pour configurer la rangée 10 de manière à accueillir trois passagers. Les deux accoudoirs 16 aux deux extrémités de la rangée 10 sont communs aux deux jeux d'accoudoirs. On a ainsi en tout six accoudoirs. Chacun des accoudoirs est monté pivotant de manière à pouvoir s'escamoter dans un dossier 14. L'accoudoir peut être revêtu d'un tissu similaire à celui du dossier 14 correspondant de telle sorte qu'il devient quasiment invisible lorsqu'il est dans sa position relevée escamotée. Lorsque la rangée 10 doit accueillir deux passagers, deux espaces assis de grande largeur sont prévus, chaque espace assis bénéficiant de deux accoudoirs 16 propres. Dans la configuration d'une rangée 10 utilisée pour trois passagers, quatre des six accoudoirs sont également utilisés mais ici, pour chaque place, un accoudoir 16 est partagé avec la (ou les) place(s) voisine(s).

Sur la figure 2, on remarque la présence d'un siège supplémentaire 18 aménagé à la pointe de chaque chevron formé par deux rangées 10 de sièges 8. Ce siège est orienté dans le sens du vol vers l'avant de l'aéronef. La configuration représentée sur la figure 2 permet donc de voyager avec treize passagers de front.

Dans l'aménagement proposé ici, on a donc des ensembles de deux ou trois sièges disposés côte à côte, sans décalage. Les sièges sont orientés perpendiculairement à la rangée de sièges à laquelle ils appartiennent. On retrouve ici de chaque côté d'un couloir longitudinal des rangées de sièges parallèles les unes aux autres. L'originalité ici par rapport à une configuration classique est que les rangées de sièges ne sont pas perpendiculaires au couloir longitudinal qui les dessert mais inclinées. Cette inclinaison est telle que les passagers assis sur ces sièges sont orientés vers le couloir permettant l'accès audits sièges. Cette configuration tout à fait originale présente de nombreux avantages. Elle permet tout d'abord de faire voyager, pour un espace donné, un grand nombre de passagers. En comparant les figures 1 et 2, on remarque également que cette configuration est modulable.

Un autre avantage de cette configuration est que la plupart des passagers peuvent quitter leurs places sans avoir à déranger leurs voisins. Dans la forme de réalisation de la figure 2, seuls les passagers se trouvant le long d'une paroi latérale 2 ou les passagers se trouvant du côté de la pointe d'un chevron formé par deux rangées 10, doivent s'excuser auprès de leurs voisins lorsqu'ils souhaitent quitter leurs places. Toutefois, ces places sont tout de même attractives car les passagers qui s'y trouvent disposent par rapport aux autres d'un espace supplémentaire par rapport aux autres passagers. On remarque également que grâce à l'inclinaison des rangées par rapport aux couloirs longitudinaux, les passagers disposent tous d'un espace important pour leurs jambes.

Dans une configuration de sièges selon l'invention, trois paramètres principaux interfèrent. Il y a tout d'abord la largeur de la cabine qui dépend généralement du diamètre du fuselage de l'aéronef, celui-ci étant le plus souvent de forme cylindrique circulaire. Il y a ensuite le pas entre deux rangées de sièges. De manière classique dans une cabine d'aéronef, ce pas est compris entre 28 et 34 pouces, soit entre 0,71 et 0,86 m. L'angle d'inclinaison d'une rangée par rapport au couloir longitudinal correspondant est le troisième paramètre principal. Cet angle est de préférence choisi de telle sorte qu'en fonction notamment du pas séparant deux rangées de sièges mais aussi de la largeur de la cabine, le passager voisin du passager se trouvant en bout de rangée du côté du couloir longitudinal puisse quitter sa place (et aussi y accéder) sans avoir à déranger son voisin de bout de rangée et à devoir s'excuser auprès de lui.

Dans la forme de réalisation de la figure 2, au niveau de la pointe de chaque chevron, il a été prévu d'aménager un siège 18. Toutefois, d'autres aménagements peuvent être envisagés ici. Cet emplacement peut être par exemple prévu pour recevoir des bagages. On peut aussi l'aménager en penderie pour recevoir les vestes et manteaux des passagers. Un aménagement en bar peut également être prévu.

Un autre avantage de cette configuration est qu'il facilite le service durant le vol. Le personnel de bord peut plus facilement accéder aux passagers pour leur servir à boire et à manger. En outre, il est plus facile pour le personnel de bord de contrôler les ceintures au moment du décollage et de l'atterrissage.

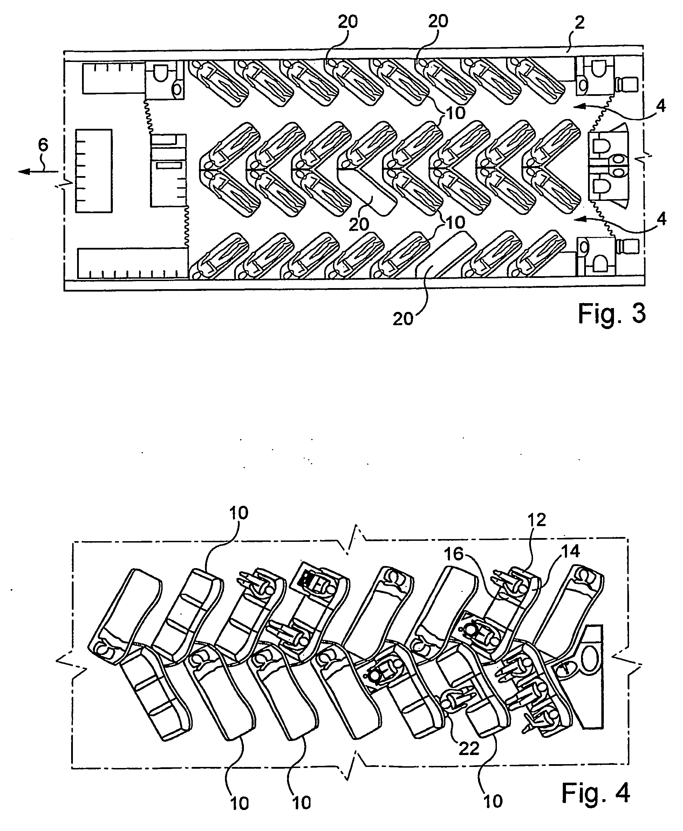

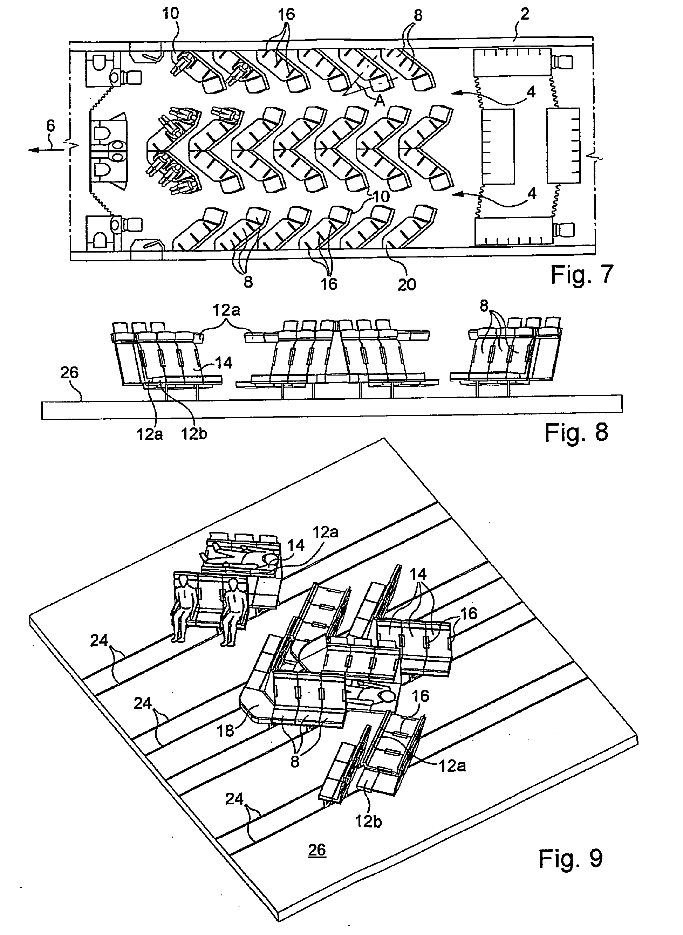

Comme illustré sur la figure 3, la configuration des figures 1 et 2 permet également d'accueillir des passagers en position couchée. Il est prévu ici, comme illustré sur les figures 8 et 9, d'accueillir à chaque fois deux passagers en position couchée dans chaque rangée 10. Ainsi, tous les passagers voyageant assis, comme représenté sur la figure 1, peuvent également être accueillis dans la cabine en position couchée. Pour accueillir confortablement ces passagers en position couchée, on utilise la largeur des sièges 8 formant la rangée 10 et on utilise également un espace se trouvant à l'extrémité de chaque rangée 10. Pour les rangées 10 se trouvant près d'une paroi latérale 2, on utilise ici l'espace se trouvant entre ladite paroi latérale 2 et le siège 8 le plus proche de cette paroi latérale. L'utilisation de cet espace permet d'agrandir sensiblement la longueur de couchage pour le passager. Pour les rangées se trouvant au centre, entre les couloirs longitudinaux 4, on utilise une partie du siège 18 pour former la couchette dans chacune des rangées du chevron correspondant.

Dans une variante de réalisation, on peut prévoir d'avoir non pas deux couchettes superposées mais trois. Ainsi, il est possible de proposer à tous les passagers une place couchée même lorsque trois passagers prennent place dans une rangée de sièges.

Les figures 8 et 9 illustrent quant à elles comment les rangées 10 de sièges 8 peuvent être transformées en couchettes. Le document FR-2 753 170 montre des sièges transformables en couchettes qui pourraient être utilisées ici.

Dans la forme de réalisation représentée, on remarque que pour passer de la position assise à la position couchée, les dossiers 14 sont pivotés d'environ 90° (un peu moins car généralement les dossiers ne sont pas verticaux mais légèrement inclinés). On remarque que l'assise 12 de chaque siège est en deux parties : une partie 12a solidaire du dossier 14 et une partie 12b pivotante. La partie 12a est donc pivotée avec le dossier 16 et vient former un rebord pour la couchette supérieure ainsi réalisée. La partie 12b de l'assise est quant à elle pivotée par rapport au bord avant de l'assise d'environ 180° pour former la surface de couchage de la couchette inférieure. On réalise ainsi de la sorte une couchette qui est plus large que la profondeur de l'assise 12 du siège dans sa position assise.

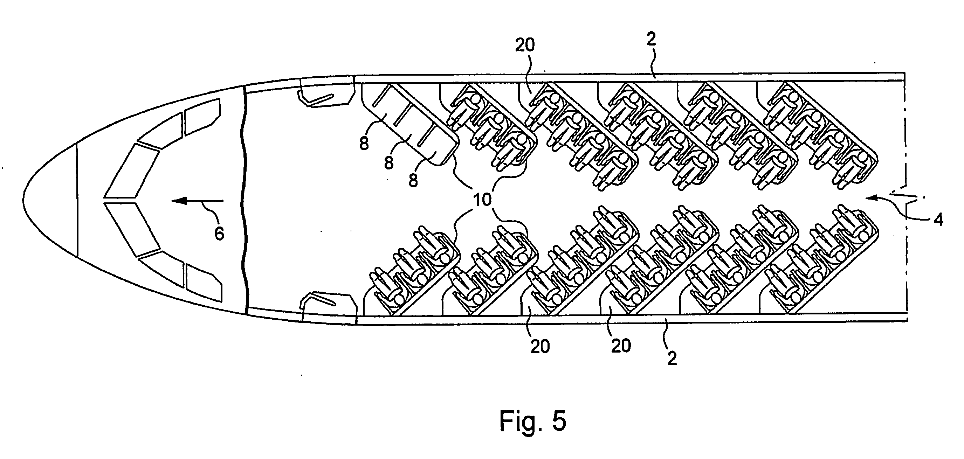

Sur la figure 5, sont représentées deux configurations possibles dans une cabine d'aéronef monocouloir. Cette figure illustre que dans un aéronef de type monocouloir, habituellement prévu par exemple pour recevoir six passagers de front, il est possible d'augmenter la largeur du couloir en conservant six passagers de front ou bien de passer à huit passagers de front. Dans ces configurations, par rapport à une configuration classique, où les rangées sont des rangées transversales avec six passagers de front, le confort des passagers est amélioré. Ceux-ci bénéficient de plus d'espace pour leurs jambes. Du côté de la paroi latérale, le passager a également de la place et n'est pas collé contre cette paroi. On remarque également que seul le passager se trouvant du côté d'une paroi latérale (avec six passagers de front) doit s'excuser auprès de son voisin lorsqu'il veut quitter sa place. Les deux autres passagers de la rangée peuvent quitter leurs places sans avoir à s'excuser.

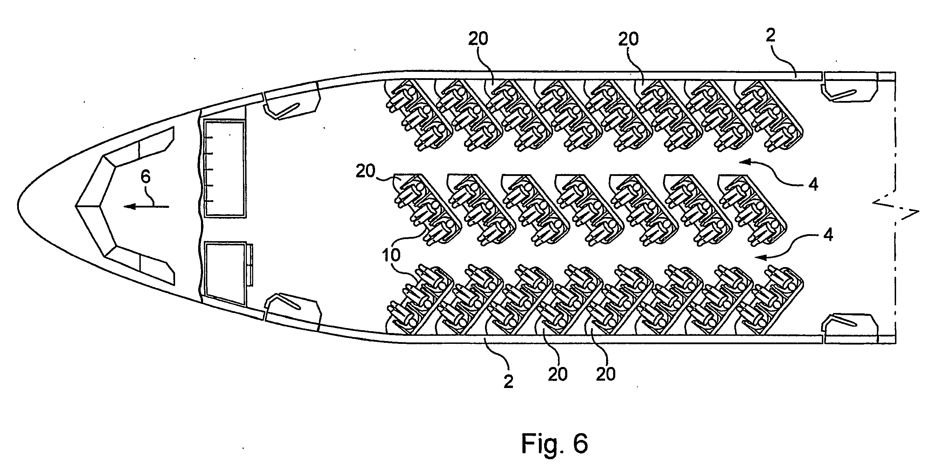

La figure 6 représente une autre configuration, par rapport à celle des figures 1 à 3, présentant deux couloirs longitudinaux. Ici, neuf passagers voyagent de front en position assise et six peuvent voyager de front en position couchée. On a ici un ensemble de rangées 10 de sièges 8 le long de chaque paroi latérale de l'aéronef et un ensemble de rangées 10 de sièges 8 qui sont toutes parallèles les unes aux autres entre les deux couloirs longitudinaux 4. Ces rangées disposées entre les couloirs longitudinaux sont sensiblement identiques à des rangées 10 de sièges 8 se trouvant le long d'une paroi latérale 2. Toutes ces rangées 10 de sièges 8 peuvent être transformées en couchettes. Lorsque les passagers sont en position assise, comme représenté sur le figures 5 et 6, on remarque à chaque fois un espace 20 à chaque extrémité de rangée, soit du côté d'une paroi latérale 2, soit d'un couloir longitudinal 4. Cet espace sensiblement triangulaire en vue de dessus peut être utilisé comme espace de rangement pour des coussins et/ou couvertures utilisés lorsque les sièges sont convertis en couchettes.

La figure 4 montre une autre variante de réalisation pour un aménagement entre deux couloirs longitudinaux. Ici les rangées ne sont plus disposées de manière à former des chevrons mais par rapport à une position en chevrons, les rangées sont décalées. Ceci permet un gain d'espace lorsque la distance entre deux couloirs longitudinaux est limitée. Cette figure 4 montre également la possibilité (qui peut être adoptée également sur les autres formes de réalisation de l'invention) de prévoir un strapontin 22 au dos d'une rangée 10. Ce strapontin est de préférence disposé à l'arrière du siège 8 de la rangée se trouvant le plus près du couloir longitudinal permettant d'accéder à ladite rangée. L'utilisation d'un tel strapontin permet à deux personnes d'être sensiblement face à face ce qui peut être plus facile pour discuter.

La figure 7 montre une autre variante de réalisation pour un aménagement d'une cabine du type de celle représentée sur les figures 1 à 3. Il est proposé ici, de préférence pour chaque rangée 10 de sièges 8, que le siège se trouvant en bout de rangée du côté du couloir 4 est non plus parfaitement dans l'alignement des autres sièges de la rangée 10 mais est incliné vers les autres sièges 8 de la rangée 10 au bout de laquelle il se trouve. Cette inclinaison est choisie en fonction de la largeur de la cabine aménagée et aussi de la largeur souhaitée pour les couloirs. Elle correspond à l'angle A fait entre l'axe du siège incliné de bout de rangée et l'axe d'un autre siège de la même rangée et est par exemple inférieure à 45° et de préférence inférieure à 30°. La figure 7 montre pour un siège incliné l'axe de ce siège, l'axe du siège voisin à ce siège incliné ainsi que l'angle A pris en considération ici.

Cette inclinaison en bout de rangée permet d'obtenir un gain sur la largeur du couloir. En outre, lorsque des passagers sont installés, les jambes des passagers se trouvant en bout de rangée du côté d'un couloir, s'étendent moins dans ledit couloir lorsque le siège est un siège incliné vers les autres sièges que lorsque le siège est aligné avec les autres sièges de la rangée.

Lorsqu'une rangée 10 de sièges 8 selon la présente invention est disposée entre deux .couloirs comme représenté par exemple sur la figure 6, l'inclinaison de siège décrite dans les paragraphes précédents n'est de préférence réalisée qu'à un bout de ladite rangée 10. On remarque sur cette figure 6 que dans cette configuration, l'un des sièges en bout de rangée est orienté vers un couloir 4 tandis que l'autre siège en bout de rangée est orienté dos au couloir. L'inclinaison décrite précédemment concerne dans un tel cas de figure le siège situé en bout de rangée et orienté vers le couloir correspondant.

La figure 7 montre uniquement des rangées de sièges de trois sièges avec un siège incliné par rapport aux deux autres sièges de la rangée et ce pour un aménagement de cabine donné. Toutefois, cette inclinaison de siège en bout de rangée peut concerner des rangées de sièges comportant un nombre de sièges différent de 3. Elle peut également être adaptée à d'autres aménagements de cabine, comme par exemple, mais non exclusivement, les aménagements montrés sur les figures 4 à 6.

Enfin, la figure 9 illustre comment des rails de fixation 24 peuvent être aménagés sur le sol 26 de la cabine afin de fixer sur celui-ci les rangées 10 de sièges 8 pour la mise en oeuvre de la présente invention.

Comme il ressort de la description qui précède, de nombreux avantages peuvent être obtenus en inclinant les rangées de sièges par rapport aux couloirs longitudinaux comme montré plus haut. En résumé, cet aménagement permet d'augmenter le nombre de passagers voyageant assis dans un espace donné tout en permettant d'augmenter également le nombre de passagers voyageant couchés dans le même espace. Les configurations assises sont également avantageuses car peu de passagers doivent s'excuser auprès de leurs voisins lorsqu'ils souhaitent quitter leurs places.

L'aménagement proposé est également avantageux pour la modularité de l'espace, pour le confort des passagers et pour les déplacements dans la cabine. Concernant ce dernier point, les temps d'embarquement et de débarquement devraient être réduits avec une telle configuration. Comme indiqué également plus haut, le service à bord de l'aéronef se trouve aussi facilité par la configuration proposée.

Bien entendu, la présente invention ne se limite pas aux formes de réalisation préférées décrites ci-dessus à titre d'exemples non limitatifs. Elle concerne également les variantes de réalisation non évoquées ci-dessus et à la portée de l'homme du métier.

## Revendications

1. Cabine dans un véhicule de transport de passagers comportant au moins un couloir longitudinal (4) ainsi que des sièges (8) destinés à accueillir des passagers et disposés en rangées (10) accessibles chacune par un couloir longitudinal (4),
**caractérisée en ce qu'**au moins une rangée (10) de sièges (8) capable, dans une première configuration, d'accueillir au moins trois passagers en position assise est disposée de manière à être inclinée par rapport à un couloir longitudinal (4),
**en ce que** les sièges (8) de ladite rangée (10) sont disposés côte à côte et orientés perpendiculairement à ladite rangée (10) et vers le couloir (4) permettant l'accès à ladite rangée (10), et
**en ce que** l'angle d'inclinaison d'une rangée (10) est telle qu'un passager assis sur le siège (8) voisin du siège (8) disposé en bout de rangée (10) du côté du couloir (4) vers lequel les sièges (8) de la rangée (10) sont orientés, peut quitter sa place sans déranger le passager assis sur le siège (8) disposé en bout de rangée (10).

2. Cabine selon la revendication 1, **caractérisée en ce que** deux rangées (10) de sièges (8) sont disposées l'une à côté d'une autre en formant un chevron.

3. Cabine selon la revendication 1, **caractérisée en ce que** deux rangées (10) de sièges (8) sont disposées l'une à côté de l'autre avec toutefois un décalage longitudinal.

4. Cabine selon la revendication 2, **caractérisée en ce qu'**un siège (18) est aménagé à la pointe du chevron formé par deux rangées (10) de sièges (8).

5. Cabine selon l'une des revendications 1 à 4, **caractérisée en ce que** pour au moins une rangée, le siège en bout de rangée et du côté du couloir, est incliné vers les autres sièges de la rangée.

6. Cabine selon l'une des revendications 1 à 5, **caractérisée en ce qu'**au moins une rangée (10) de sièges (8) est transformable en deux couchettes superposées, chaque siège (8) comportant une assise (12) et un dossier (14) et les dossiers (14) pouvant être pivotés de manière à former une surface plane sensiblement horizontale au-dessus des assises (12) transformées en une couchette.

7. Cabine selon l'une des revendications 1 à 6, **caractérisée en ce qu'**au moins une rangée (10) est modulable de manière à pouvoir accueillir en position assise, soit trois passagers dans la première configuration, soit deux passagers dans une seconde configuration.

8. Cabine selon la revendication 7, **caractérisé en ce que** ladite rangée (10) modulable comprend un premier jeu d'accoudoirs (16) pour la première configuration et un second jeu d'accoudoir (16) pour la seconde configuration, chaque accoudoir (16) étant monté pivotant de manière pouvoir s'escamoter dans un dossier (14).

9. Cabine selon l'une des revendications 1 à 7, **caractérisée en ce qu'**elle comporte deux parois latérales (2) et un couloir longitudinal (4), et **en ce que** des rangées (10) inclinées sont disposées parallèlement les unes aux autres à chaque fois entre une paroi latérale (2) et le couloir longitudinal (4).

10. Cabine selon l'une des revendications 1 à 7, **caractérisé en ce qu'**elle comporte deux parois latérales (2) et deux couloirs longitudinaux (4), **en ce que** des rangées (10) inclinées sont disposées parallèlement les unes aux autres à chaque fois entre un couloir longitudinal (4) et une paroi latérale (2), et **en ce que** des rangées (10) inclinées sont disposées parallèlement les unes aux autres à chaque fois entre les deux couloirs longitudinaux (4).

11. Cabine selon l'une des revendications 1 à 7, **caractérisé en ce qu'**elle comporte deux parois latérales (2) et deux couloirs longitudinaux (4), **en ce que** des rangées (10) inclinées sont disposées parallèlement les unes aux autres à chaque fois entre un couloir longitudinal (4) et une paroi latérale (2), et **en ce que** des rangées (10) inclinées sont disposées en chevrons entre les deux couloirs longitudinaux (4).

12. Cabine selon l'une des revendications 9 à 11, **caractérisée en ce que** chaque rangée (10) de sièges (8) est transformable en deux couchettes superposées, et **en ce que** l'espace (20) sensiblement triangulaire entre chaque rangée (10) se trouvant le long d'une paroi latérale (2) et la paroi latérale (2) correspondante est utilisé pour former un complément de couchette.

13. Cabine selon la revendication 12, **caractérisée en ce qu'**un espace de rangement est aménagé à chaque pointe d'un chevron formé par deux rangées (10) de sièges.

14. Cabine selon l'une des revendications 1 à 13, **caractérisée en ce que** tous les sièges (8) sont orientés vers l'avant du véhicule.

15. Cabine selon l'une des revendications 1 à 14, **caractérisée en ce que** dans au moins une rangée les sièges, l'assise des sièges comporte une partie pivotante (12b) pouvant être pivotée par rapport au bord avant de l'assise d'environ 180° pour former une surface de couchage élargie.

16. Cabine selon la revendication 6, **caractérisée en ce que** l'assise (12) de chaque siège (8) d'une rangée (10) de sièges transformable en deux couchettes présente une partie (12a) solidaire du dossier (14) et une partie (12b) montée pivotante par rapport au bord avant de l'assise (12).

17. Aéronef, **caractérisé en ce qu'**il comporte une cabine selon l'une des revendications 1 à 16.

## Claims

1. Cabin in a passenger-transport vehicle comprising at least one longitudinal aisle (4) as well as seats (8) intended to accommodate passengers and arranged in rows (10) each accessible via a longitudinal aisle (4),
**characterized in that** at least one row (10) of seats (8) which is capable, in a first configuration, of accommodating at least three passengers in seated position is arranged so as to be slanted in relation to a longitudinal aisle (4),
**in that** the seats (8) of the said row (10) are arranged side by side and oriented perpendicularly to the said row (10) and toward the aisle (4) allowing the access to the said row (10), and
**in that** the angle of inclination of a row (10) is such that a passenger seated in the seat (8) next to the seat (8) arranged at the end of the row (10) by the aisle (4) toward which the seats (8) of the row (10) are oriented, may leave his seat without disturbing the passenger seated in the seat (8) arranged at the end of the row (10).

2. Cabin according to claim 1, **characterized in that** two rows (10) of seats (8) are arranged one beside another forming a chevron.

3. Cabin according to claim 1, **characterized in that** two rows (10) of seats (8) are arranged one beside the other with, however, a longitudinal offset.

4. Cabin according to claim 2, **characterized in that** a seat (18) is laid out at the point of the chevron formed by two rows (10) of seats (8).

5. Cabin according to one of claims 1 to 4, **characterized in that** for at least one row, the seat at the end of the row and by the aisle is slanted toward the other seats of the row.

6. Cabin according to one of claims 1 to 5, **characterized in that** at least one row (10) of seats (8) is convertible into two superposed berths, each seat (8) comprising a sitting surface (12) and a back (14) and the backs (14) being able to be pivoted so as to form a substantially horizontal plane surface above the sitting surfaces (12) converted into a berth.

7. Cabin according to one of claims 1 to 6, **characterized in that** at least one row (10) is adjustable so as to be able to accommodate, in seated position, either three passengers in the first configuration, or two passengers in a second configuration.

8. Cabin according to claim 7, **characterized in that** said adjustable row (10) comprises a first set of armrests (16) for the first configuration and a second set of armrests (16) for the second configuration, each armrest (16) being pivotably mounted so as to be able to retract into a back (14)

9. Cabin according to one of claims 1 to 7, **characterized in that** it comprises two side walls (2) and a longitudinal aisle (4), and **in that** slanted rows (10) are arranged parallel to each other each time between a side wall (2) and the longitudinal aisle (4).

10. Cabin according to one of claims 1 to 7, **characterized in that** it comprises two side walls (2) and two longitudinal aisles (4), **in that** slanted rows (10) are arranged parallel to each other each time between a longitudinal aisle (4) and a side wall (2), and **in that** slanted rows (10) are arranged parallel to each other each time between the two longitudinal aisles (4).

11. Cabin according to one of claims 1 to 7, **characterized in that** it comprises two side walls (2) and two longitudinal aisles (4), **in that** slanted rows (10) are arranged parallel to each other each time between a longitudinal aisle (4) and a side wall (2), and **in that** slanted rows (10) are arranged in chevrons, between the two longitudinal aisles (4).

12. Cabin according to one of claims 9 to 11, **characterized in that** each row (10) of seats (8) Is convertible into two superposed berths, and **in that** the substantially triangular space (20) between each row (10) located along a side wall (2) and the corresponding side wall (2) is used to form an additional berth portion.

13. Cabin according to claim 12, **characterized in that** a storage space is provided at each point of a chevron formed by two rows (10) of seats.

14. Cabin according to one of claims 1 to 13, **characterized in that** all the seats (8) are oriented toward the front of the vehicle.

15. Cabin according to one of claims 1 to 14, **characterized in that** in at least one row of seats, the sitting surface of the seats comprises a pivoting part (12b) that can pivot in relation to the front edge of the sitting surface by about 180° to form an enlarged sleeping surface.

16. Cabin according to claim 6, **characterized in that** the sitting surface (12) of each seat (8) of a row of seats (10) convertible into two berths has a part (12a) joined to the back (14) and a part (12b) pivotably mounted in relation to the front edge of the sitting surface (12).

17. Aircraft, **characterized in that** it comprises a cabin according of one of claims 1 to 16.

## Patentansprüche

1. Kabine in einem Fahrzeug zum Transportieren von Passagieren, enthaltend zumindest einen Längsgang (4) sowie Sitze (8), die dazu bestimmt sind, Passagiere aufzunehmen und die in Reihen (10) angeordnet sind, von denen jede über einen Längsgang (4) zugänglich ist,
**dadurch gekennzeichnet, dass** zumindest eine Reihe (10) von Sitzen (8), die in einer ersten Konfiguration zumindest drei Passagiere in Sitzposition aufnehmen kann, so angeordnet ist, dass sie schräg bezüglich eines Längsgangs (4) verläuft,
die Sitze (8) der Reihe (10) nebeneinanderliegend angeordnet sind und senkrecht bezüglich der Reihe (10) und zum Gang (4) hin ausgerichtet sind, was den Zugang zur Reihe (10) ermöglicht, und
der Schrägstellungswinkel einer Reihe (10) derart ist, dass ein Passagier, der auf dem Sitz (8) sitzt, der benachbart zu dem am Ende der Reihe (10) angeordneten Sitz (8) auf der Seite des Gangs (4) liegt, zu dem die Sitze (8) der Reihe (10) hin ausgerichtet sind, seinen Platz verlassen kann, ohne den Passagier zu stören, der auf dem am Ende der Reihe (10) angeordneten Sitz (8) sitzt.

2. Kabine nach Anspruch 1,
**dadurch gekennzeichnet, dass** zwei Reihen (10) von Sitzen (8) nebeneinander angeordnet sind und dabei eine V-Form bilden.

3. Kabine nach Anspruch 1,
**dadurch gekennzeichnet, dass** zwei Reihen (10) von Sitzen (8) nebeneinander, jedoch mit Längsversatz, angeordnet sind.

4. Kabine nach Anspruch 2,
**dadurch gekennzeichnet, dass** ein Sitz (18) an dem Scheitel der V-Form eingerichtet ist, die von zwei Reihen (10) von Sitzen (8) gebildet wird.

5. Kabine nach einem der Ansprüche 1 bis 4,
**dadurch gekennzeichnet, dass** zumindest bei einer Reihe der Sitz am Ende der Reihe und auf der Seite des Gangs schräg zu den weiteren Sitzen der Reihe verläuft.

6. Kabine nach einem der Ansprüche 1 bis 5,
**dadurch gekennzeichnet, dass** zumindest eine Reihe (10) von Sitzen (8) in zwei übereinanderliegende Liegeplätze umwandelbar ist, wobei jeder Sitz (8) eine Sitzfläche (12) und eine Rückenlehne (14) aufweist und die Rückenlehnen (14) so verschwenkt werden können, dass sie eine im wesentlichen horizontal verlaufende ebene Fläche über den zu einem Liegeplatz umgewandelten Sitzflächen (12) bilden.

7. Kabine nach einem der Ansprüche 1 bis 6,
**dadurch gekennzeichnet, dass** zumindest eine Reihe (10) so variiert werden kann, dass sie in Sitzposition entweder drei Passagiere in der ersten Konfiguration oder zwei Passagiere in einer zweiten Konfiguration aufnehmen kann.

8. Kabine nach Anspruch 7,
**dadurch gekennzeichnet, dass** die variierbare Reihe (10) einen ersten Satz von Armlehnen (16) bei der ersten Konfiguration und einen zweiten Satz von Armlehnen (16) bei der zweiten Konfiguration aufweist, wobei jede Armlehne (16) so verschwenkbar gelagert ist, dass sie in eine Rückenlehne (14) eingefahren werden kann.

9. Kabine nach einem der Ansprüche 1 bis 7,
**dadurch gekennzeichnet, dass** sie zwei Seitenwände (2) und einen Längsgang (4) aufweist und dass die schräg verlaufenden Reihen (10) parallel zueinander jeweils zwischen einer Seitenwand (2) und dem Längsgang (4) angeordnet sind.

10. Kabine nach einem der Ansprüche 1 bis 7,
**dadurch gekennzeichnet, dass** sie zwei Seitenwände (2) und zwei Längsgänge (4) aufweist und dass schräg verlaufende Reihen (10) parallel zueinander jeweils zwischen einem Längsgang (4) und einer Seitenwand (2) angeordnet sind und dass schräg verlaufende Reihen (10) parallel zueinander jeweils zwischen den beiden Längsgängen (4) angeordnet sind.

11. Kabine nach einem der Ansprüche 1 bis 7,
**dadurch gekennzeichnet, dass** sie zwei Seitenwände (2) und zwei Längsgänge (4) aufweist, dass schräg verlaufende Reihen (10) parallel zueinander jeweils zwischen einem Längsgang (4) und einer Seitenwand (2) angeordnet sind und dass schräg verlaufende Reihen (10) in V-Form zwischen den beiden Längsgängen (4) angeordnet sind.

12. Kabine nach einem der Ansprüche 9 bis 11,
**dadurch gekennzeichnet, dass** jede Reihe (10) von Sitzen (8) in zwei übereinanderliegende Liegeplätze umwandelbar ist und dass der im Wesentlichen dreieckförmige Raum (20) zwischen jeder Reihe (10), die sich entlang einer Seitenwand (2) befindet, und der entsprechenden Seitenwand (2) dazu verwendet wird, einen Liegeplatzzusatz zu bilden.

13. Kabine nach Anspruch 12,
**dadurch gekennzeichnet, dass** an jedem Scheitel einer aus zwei Sitzreihen (10) gebildeten V-Form ein Stauraum eingerichtet ist.

14. Kabine nach einem der Ansprüche 1 bis 13,
**dadurch gekennzeichnet, dass** sämtliche Sitze (8) zum Bug des Fahrzeugs hin ausgerichtet sind.

15. Kabine nach einem der Ansprüche 1 bis 14,
**dadurch gekennzeichnet, dass** zumindest bei einer Reihe von Sitzen die Sitzfläche einen verschwenkbaren Teil (12b) aufweist, der gegenüber dem vorderen Rand der Sitzfläche um etwa 180° verschwenkt werden kann, um eine erweiterte Liegefläche zu bilden.

16. Kabine nach Anspruch 6,
**dadurch gekennzeichnet, dass** die Sitzfläche (12) eines jeden Sitzes (8) einer Sitzreihe (10), die in zwei Liegeplätze umwandelbar ist, einen fest mit der Rücklehne (14) verbundenen Teil (12a) und einen gegenüber dem vorderen Rand der Sitzfläche (12) verschwenkbar gelagerten Teil (12b) aufweist.

17. Luftfahrzeug, **dadurch gekennzeichnet, dass** es eine Kabine nach einem der Ansprüche 1 bis 16 aufweist.
